# EUROPEAN PATENT SPECIFICATION

(11) **EP 1 083 417 B1**
(45) Date of publication and mention of the grant of the patent: **05.07.2006**
(21) Application number: 00660154.6
(22) Date of filing: 11.09.2000
(51) Int. Cl.: G01G 23/01

(54) **Method and arrangement for processing and comparing weighing results**
Verfahren und Vorrichtung zur Verarbeitung und Vergleichung von Wiegeergebnissen
Procédé et dispositif pour le traitement et la comparaison des résultats de pesée

(30) Priority: 10.09.1999 FI 991927
(43) Date of publication of application: 14.03.2001
(73) Proprietor: TAMTRON OY, 33561 Tampere (FI)
(72) Inventor: Asikainen, Pentti, 35800 Mänttä (FI)
(74) Representative: Kupiainen, Juhani Kalervo

(56) References cited:
- EP-A- 0 465 006
- US-A- 5 426 585
- US-A- 5 832 417

## Description

The invention relates to a method and an arrangement for processing and comparing weighing results, More particularly, the invention relates to a method and an arrangement for processing and comparing weighing results, wherein weighing signals are transferred to a data processing unit for effecting a further processing of the measurement results in said data processing unit.

The prior art weighing systems typically consist of weighing sensors and special scales instruments designed for weighing application. Such scales instruments are provided with necessary A/D (Analog/Digital) converters for sensor signals, and often also with a display unit and a serial port for other peripherals. In some prior art solutions, the peripheral device may also be a PC (Personal Computer).

The prior art involves substantial drawbacks. It is quite expensive and impractical to employ a separate scales instrument for analyzing measurement results. The manufacturing costs of a separate scales instrument are high because of low unit numbers and, for the same reason, it is also poorly compatible with other data processing systems. The use of a PC alone is impossible as the PC does not include A/D converters which would be compatible with sensors. In addition, the data security of a standard PC at present is insufficient for storing calibration data required by sensors.

A prior art weighing system is known e.g. from US-A-5832417.

It is an object of the present invention to alleviate the above drawbacks associated with the prior art.

In one aspect of the invention, the calibration of a scales/sensor is followed by calculating a check sum on the basis of the values of calibration setting parameters of the scales/sensor, whereby the chuck sum value can be monitored for securing that the calibration parameters have not changed. The compilation of a check sum is also preferably contributed to by a program code of the apparatus for making sure that the program code has not been modified. One embodiment of the invention involves the determination of a figure of merit for judging the reliability of a weighing result even more accurately.

The present inventive method and arrangement can be used for recording and processing weighing results with a data processing unit without involving a separate weighing instrument. Furthermore, in the inventive method and arrangement for processing and comparing weighing results, the constancy of calibration data is guaranteed with a data processing unit and a change, should it occur, can be preferably reported to a user.

The benefits associated with a solution of the invention are preferably achievable by means of an embodiment, wherein the weighing sensors are provided with an A/D converter and a serial buffer. The analog signal of weighing sensors is digitized, converted to a serial mode by means of the serial buffer and transmitted to a data processing unit. The data processing unit comprises a variety of software blocks for processing both calibration data for sensors, measurement results, and further processing of the results.

A method of the invention for processing and comparing weighing results is characterized by
- calculating a check sum on the basis of calibration settings for at least one sensor by means of a data processing unit, e.g. a code for a calibration software,
- storing the check sum,
- comparing variations made and/or occurring randomly in the check sum either with prior theoretical and/or preset check sums,
- judging a weighing result for its reliability on the basis of the result of said comparison, and
- determining a figure of merit for further judging said reliability of said weighing result by menas of said data processing unit.
   An arrangement of the invention for processing and comparing weighing results is characterized by
- a data processing unit, comprising a program code for calculating a check sum on the basis of calibration settings of at least one sensor,
- means for storing the check sum,
- means for comparing variations made and/or occurring randomly in the check sum either with prior theoretical and/or preset check sums for judging a weighing result for its reliability, and
- means for determining a figure of merit for further judging said reliability of said weighing by said data processing unit.

Preferred embodiments of the invention are set forth in the non-independent claims.

A few preferred embodiment of the invention will now be described in more detail with reference to the accompanying drawings, in which
fig. 1 shows one embodiment for a method of the invention in a flow chart,
fig. 2A shows one embodiment for an arrangement of the invention in a block diagram,
fig. 2B shows one embodiment for an arrangement of the invention in a block diagram, featuring the use of several sensors,
fig. 2C shows a second embodiment for an arrangement of the invention in a block diagram, featuring the use of several sensors,
fig. 2D shows one embodiment for an arrangement of the invention in a block diagram, with a special feature relating to the economical use of serial buffers,
fig. 3 shows one embodiment for a method of the invention in a flow chart, with a special feature relating to more sophisticated data processing,
fig. 4 shows one inventive embodiment for implementing the logical software relationships of a data processing unit preferably as a variant of the Venn diagram, and
fig. 5 shows one embodiment for an inventive arrangement, with a special feature relating to the interaction between weighing instruments and a data processing unit and the exemplary further processing of weighing data.

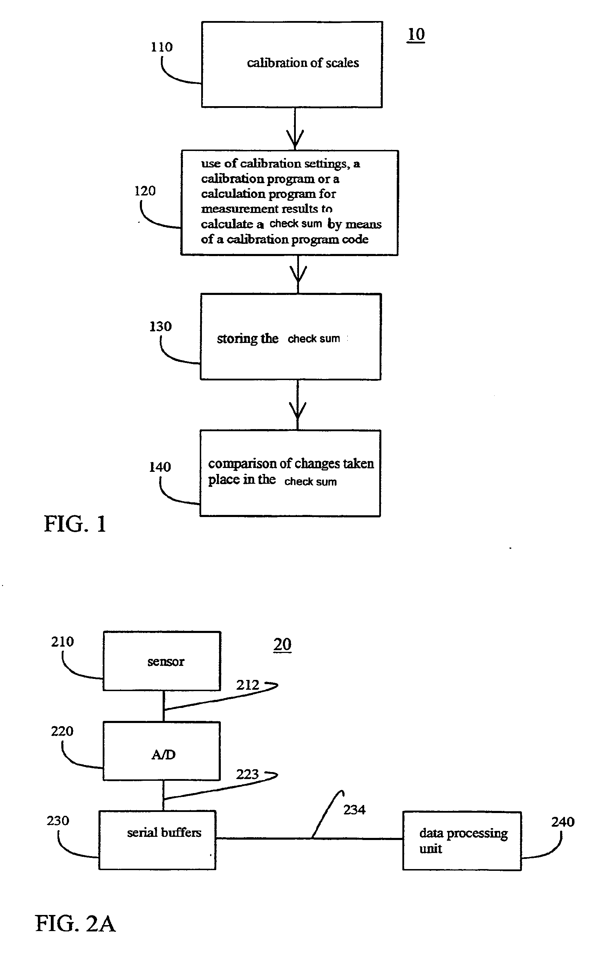

Fig. 1 shows a flow chart for one embodiment of the inventive method. It comprises first a sequence 110 for the calibration of a weighing appliance or scales. This is followed by a sequence 120 which uses the calibration settings, the calibration program block and/or the calculation program for measurement results of the weighing appliance for calculating a check sum by means of a data processing unit, e.g calibration software or calculation software for measurement results. The check sum is stored in a sequence 130. In a sequence 140, variations made in the check sum are compared by means of the data processing unit. The data processing unit may be a PC or some other relevant computer-based apparatus, such as Psion or Apple Macintosh, or a mobile communicator, such as a UMTS (Universal Mobile Telecommunications Service), GSM (Global System for Mobile Communications), CDMA (Code Division Multiple Access), WCDMA (Wide Band Code Division Multiple Access), NMT, Iridium, Inmarsat or TelDesic mobile communicator.

In the arrangement of fig. 2A, a sensor 210 is preferably connected to an A/D converter 220 by way of a link 212. The A/D converter is in turn connected to serial buffers 230 by way of a link 223. The serial buffers 230 are connected to a data processing unit 240 by way of a communication link 234. In certain embodiments, the serial buffers 230 can preferably be of the type RS 232C, RS 422/485, CAN or some other corresponding type. In preferred embodiments, the communication link to the data processing unit can be provided by way of a local network or some other immobile communication bus, or by way of a radio.

The links 212, 223 are typically conductors in some preferred embodiments. In one preferred embodiment, the A/D converter 220 and the serial buffers 230 are established on a common IC circuit (Integrated Circuit). It is also possible that the A/D converter 220 and the serial buffers 230 be established on the same IC circuit as a digital signal processor (DSP) and/or a modem (modulator-demodulator). The A/D converter, the serial buffers, the digital signal processor and/or the modem can be positioned in contact with or in the immediate vicinity of a sensor. The link 234 is preferably an immobile communication link or a UMTS, GSM, CDMA, WCDMA, NMT, Iridium, Inmarsat or TelDesic communication link established by way of a radio.

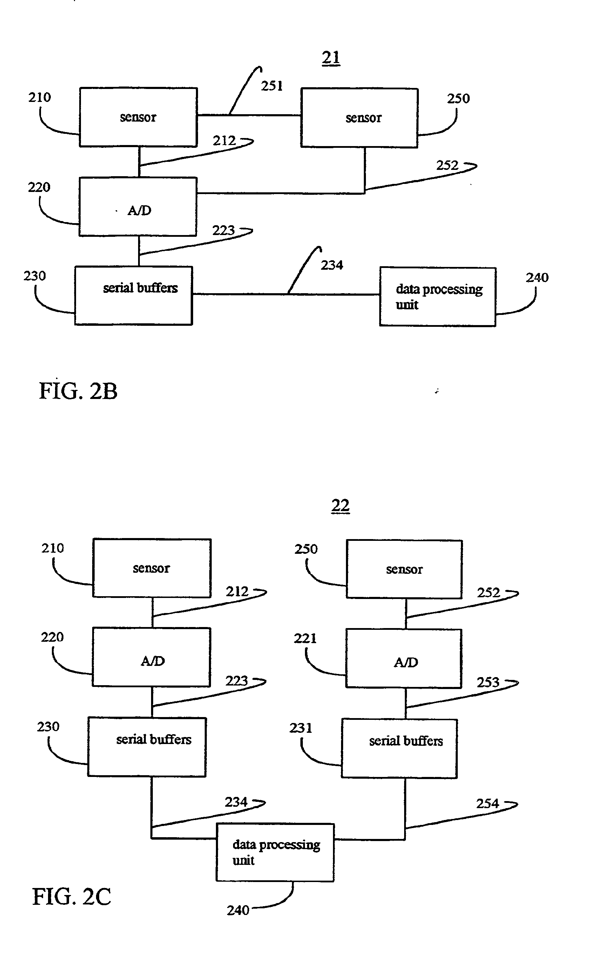

Fig. 2B shows an embodiment 21, which preferably observes various application possibilities for A/D converters, as well. A sensor 250 is preferably in communication with an A/D converter 220 either by way of a sensor 210 over links 251, 212 or a link 252. In one preferred embodiment, the A/D converter has its input multiplexed. This is followed by carrying the signal of both sensor 210 and sensor 220 to a data processing unit 240 from a serial buffer 230 by way of a link 234.

Fig. 2C shows a preferred embodiment 22, which preferably does not require multiplexing. Each sensor 210, 250 is provided with respective A/D converters 220, 221 and serial buffers 230, 231. In some embodiments, the serial buffers may be of the type RS 232C, RS 422/485, CAN, or some other similar type. In some preferred embodiments, however, the number of data processing units 240 is one.

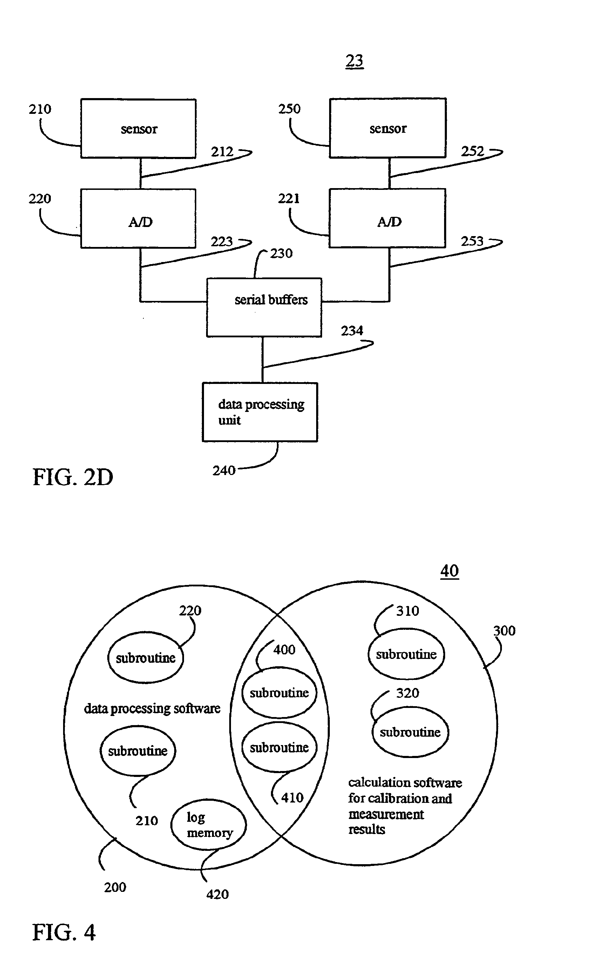

On the other hand, fig. 2D employs a single serial buffer 230 for processing signals of two signal routes provided with an A/D converter (220, 221). However, even in this preferred embodiment, the number of data processing units 240 is one, yet it is possible that some embodiments of the invention be provided with a plurality of data processing units. In this case, various data processing functions are divided between data processing units preferably in such a way that the assigned data processing functions are co-processed by the data processing units.

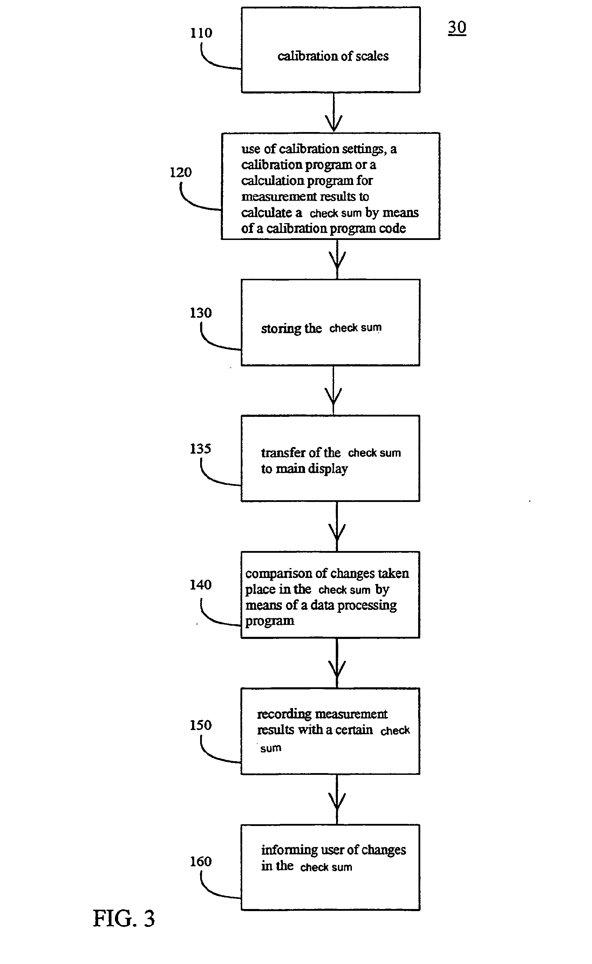

Fig. 3 depicts an embodiment 30, comprising a sequence 110 for calibrating a weighing appliance. This is followed by using the calibration settings, the calibration program block and/or the calculation program for measurement results for calculating a check sum by means of a calibration program code in a sequence 120. A sequence 130 refers to storing the check sum, followed by transferring the check sum to a main display in a sequence 135. The changes made in the check sum are compared by a data processing program with prior theoretical and/or preset check sums in a sequence 140.

A sequence 150 relates to recording the measurement results with a certain check sum. Finally, it is possible that a user be informed about changes in the check sum in a sequence 160. Thus, the user may take necessary measures to make sure that the weighing results continue to be reliable.

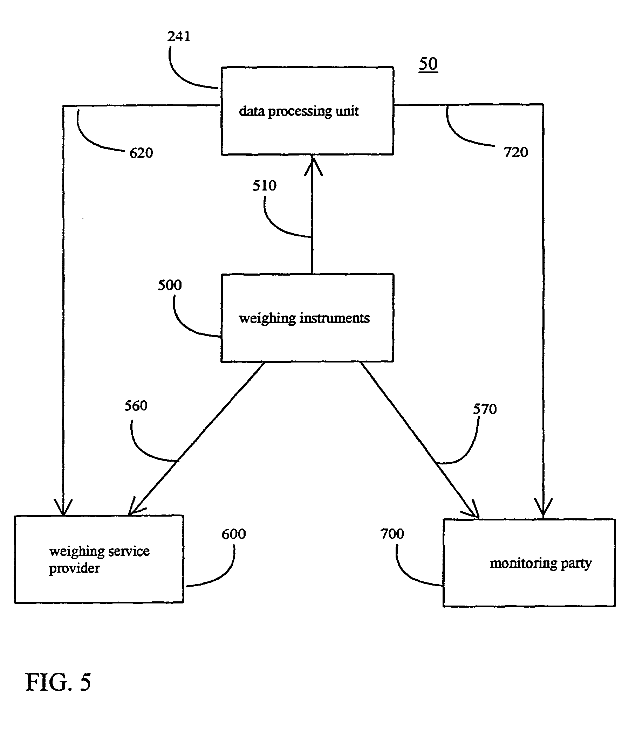

Fig. 4 depicts one embodiment relating to preferred implementations of calculation software 300 for calibration software/measuring results and for data processing software 200. Both or just one of the software units 300, 200 may be required to have a password for restricting the use. This reduces a risk of error changes in software presettings.

Despite the fact that the data processing software 200 and the calculation software 300 for calibration software/measurement results are separate software units, with the same or different restrictions on the rights of use thereof, such software units may preferably deploy common subroutines 400, 410. Thus, the manufacturing costs of such software units are substantially reduced and reliability is improved. The load caused by the software units 200, 300 on the data processing unit 240 is also alleviated, thus resulting in a higher operating speed. It can be appreciated, however, that in some embodiments of the invention the software units 200, 300 may function independently in separate data processing units. In this case, the data processing units are preferably in communication with each other.

Fig. 4 shows also a log memory 420, in which the measurement results can be recorded with a certain check sum. Thus, it is only the calculation software which can store the measurement results in the log memory of a check sum. The data processing software is preferably capable of reading log memory information, but incapable of making changes therein.

The calculation program for measurement results may work out a figure of merit for weighing from weight measurement samples, measurement disturbing quantities (e.g. acceleration, regarding those measurable by sensors), measurement results for disturbing signals and/or combinations of the above. This figure of merit is based e.g. on analysis involving the number or breakdown of weight measurement samples, the peaks or variance of samples, the differences between measurement samples obtained from various weighing sensors (if the system consists of several sensors) or the like or a combination of some of the above.

In addition, regarding the calculation of a figure of merit, it is possible to exploit sensors which measure phenomena interfering with a weighing operation. These include e.g. acceleration, temperature, electromagnetic radiation, air pressure, humidity, wind speed, wind direction, angle of inclination, etc. Such information can be used for compensating for the impact of error factors, followed by calculating a figure of merit from the compensated result. Alternatively, the error factors are used as an expedient in working out a figure of merit, the measurement and disturbances of error factors being thus used for the calculation of a figure of merit. In a further alternative, following the compensation, the calculation of a figure of merit takes advantage of the above measurements, the error factors being used for the compensation but the figure of merit being only calculated from error measurements and error factors.

The figure of merit can be set with limits in such a way that, when the figure of merit lies outside the set range or limits, the situation is reported to a user, the weighing result is discarded and/or a new weighing is prompted. The figure of merit can be displayed along with a weighing result on a display and/or stored in a log memory to accompany each weighing result. The figure of merit can also be enclosed with a document disclosing the weighing result.

Fig. 5 shows a data processing unit 241, which in some preferred embodiments may be for example an on-board computer in a vehicle. Weighing instruments 500 comprise weighing means spaced apart from a vehicle or, for example, weighing instruments 500 mounted on a vehicle loader. Furthermore, in some preferred embodiments, the weighing instruments 500 can be disposed for example in engagement with any carrying, loading and/or shipping equipment.

The data processing unit 241 comprises preferably a PC, a mobile communicator and/or a combination of a mobile communicator and a PC, an Apple Macintosh computer, and/or any computer configuration based on the Microsoft CE and/or Sybase operating system. One definitely preferred embodiment comprises the use of a typical PC or some other computer, the computer in question having its operating system designed in view of the present inventive application. Such preferred operating system is quick in booting and, hence, the data processing unit can be started promptly. In addition, the compatibility of said operating system with other operating systems is designed in such a way that the initial code of commercial viruses has as poor a match or compatibility as possible with the present operating system.

The present data processing unit has a versatility which is used in some inventive embodiments in such a way that a single data processing unit 241 is used for other vehicular applications, such as engine monitoring, gearshift control, lights control, various alarms, display of dashboard information, as a dial system, start prevention, anti-theft alarm, as a radio/TV, a telephone and/or a principal apparatus for the GPS (Global Positioning System) system. Hence, the data processing unit 241 may be preferably used also for monitoring a plurality of devices, even when there is no weighing going on. In one preferred embodiment, a user's PIN (Personal Identification Number) code, password and/or some other user's identification are coupled with start prevention. This makes it possible to monitor the operation of users' on-board computer and to set preferred restrictions of use both on the on-board computer and the vehicle.

The weighing instruments 500 include preferably sensors 210, 250, A/D converters 220, 221 and/or serial buffers 230, 231. All communication links 510, 560, 570, 620, 720 are preferably GSM, UMTS, CDMA, WCDMA, Bluetooth, Iridium, Inmarsat, TelDesic, TCP/IP and/or IrDA wireless communication links or normal immobile telephone connections. In one preferred embodiment, a partial or entire document regarding a weighing procedure, which may include for example a check sum, can be compiled either by the weighing instruments 500 or the data processing unit 241. Moreover, in some preferred embodiments of the invention, the document or weighing information can be preferably delivered to a monitoring party 700 and/or a weighing service provider 600. The data processing unit 241 and the weighing instruments 500 are also capable of transmitting other information to the monitoring party 700 and/or the weighing service provider 600.

The invention has been described above with reference to the enclosed exemplary embodiments. It is obvious that, in several embodiments, a single data processing unit 240, 241 is able to process a multitude of signals within its signal processing capacity. It is likewise obvious that the inventive weighing instruments 500 can be favourably applied in scales and weighing appliances dealing with automobiles, trains, bridges, processes, laboratories, wheel loaders, forklift trucks, pallet trucks, cranes, excavators, reach trucks, garbage trucks, timber jacks, vehicles, truck cranes and other preferred scales and weighing systems.

The above description deals with several major industrial and commercial benefits achieved by the inventive method. The present inventive method and arrangement can be used for avoiding the acquisition of expensive and impractical separate scales instruments. In addition, weighing results improve in terms of reliability, and the information representative of weighing results and reliability thereof can be processed in a more flexible manner in various data systems. This reduces the logistic efforts associated with recording and documenting various weighing results.

The invention has been discussed above with reference to the enclosed embodiments. It is obvious, however, that the invention is not limited solely to those but encompasses all embodiments falling within the definition of the appended claims.

## Claims

1. A method for processing and comparing weighing results, **characterized by**
- calculating a check sum on the basis of calibration settings for at least one sensor (210, 250) by means of a data processing unit (240, 241), e.g. a code (120) for a calibration software (300),
- storing a check sum (130),
- comparing variations made and/or occurring randomly in said check sum either with prior theoretical and/or preset check sums,
- judging a weighing result for its reliability on the basis of the result of said comparison, and
- determining a figure of merit for further judging said reliability of said weighing result by means of said data processing unit.

2. A method as set forth in claim 1, **characterized in that** said check sum is also compiled on the basis of a calculation program for a calibration program block and/or measurement results.

3. A method as set forth in claim 1 for processing and comparing weighing results, **characterized in that** the data processing unit (240, 241) has a program code which comprises both the calculation software (300) for calibration software/measurement results and a data processing software (200).

4. A method as set forth in claim 1 for processing and comparing weighing results, **characterized in that** the calculation software (300) for calibration software/measurement results and the data processing software (200) employ common subroutines (400,401).

5. A method as set forth in claim 1 for processing and comparing weighing results, **characterized in that** the calculation software (300) for calibration software/measurement results and the data processing software (200) have restrictions of use which are different from each other.

6. A method as set forth in claim 1 for processing and comparing weighing results, **characterized in that** weighing information, such as a document carrying a check sum, is delivered from the data processing unit (240, 241) to a monitoring party (700) and/or a weighing service provider (600).

7. A method as set forth in claim 1 for processing and comparing weighing results, **characterized in that** variations in the check sum are reported to a user.

8. A method as set forth in claim 1 for processing and comparing weighing results, **characterized in that** the data processing unit (240, 241) is used for compiling a document and/or a log memory entry on the basis of said processing and comparison.

9. A method as set forth in claim 1 for processing and comparing weighing results, **characterized by**
- digitizing at least one analog output signal of at least one sensor (210, 250),
- transmitting said digital signal in a serial mode to the data processing unit (240) from serial buffers (230, 231).

10. A method as set forth in claim 9 for processing and comparing weighing results, **characterized in that** said serial-mode data transmission 510 is effected by way of GSM, UMTS, CDMA, WCDMA, Bluetooth, Iridium, Inmarsat, TelDesic, TCP/IP and/or IrDA wireless communication links, or by way of normal immobile connections.

11. A method as set forth in claim 1, **characterized by** determining said figure of merit for weighing from weight measurement samples, measurement-disturbing quantities, measurement results for disturbing signals, and/or from combinations of the above.

12. A method as set forth in claim 11, **characterized in that** the figure of merit is based on analysis, involving the number or breakdown of weight measurement samples, the peaks or variance of the samples, the differences between measurement samples obtained from a plurality of weighing sensors, or a combination of some of the above.

13. A method as set forth in claim 11, **characterized in that** determination of the figure of merit is effected by using the measurement of acceleration, temperature, electromagnetic radiation, air pressure, humidity, wind speed, wind direction and/or an angle of inclination.

14. A method as set forth in claim 11, **characterized in that** the figure of merit is set with a limit or range in such a way that, when the figure of merit lies outside the set range, the user is informed, the weighing result is discarded and/or a new weighing is prompted.

15. A method as set forth in claim 11, **characterized in that** the compiled figure of merit is shown on a display along with a weighing result, stored in a log memory in logical association with a weighing result, and/or displayed on a document along with a weighing result.

16. An arrangement for processing and comparing weighing results, **characterized by** comprising
- a data processing unit (240,241), comprising a program code (300) for calculating a check sum on the basis of calibration settings of at least one sensor (210, 250),
- means for storing a check sum (130),
- means for comparing variations made and/or occurring randomly in the check sum either with prior theoretical and/or preset check sums for judging a weighing result for its reliability, and
- means for determining a figure of merit for further judging said reliability of said weighing result by said data processing unit.

17. An arrangement as set forth in claim 16, **characterized in that** the data processing unit comprises a program code for calculating said check sum also on the basis of a calculation program for a calibration program block and/or measurement results.

18. An arrangement as set forth in claim 16 for processing and comparing weighing results, **characterized in that** the data processing unit (240, 241) comprises a PC, a mobile communicator, and/or a combination of a mobile communicator and a PC and/or an Apple Macintosh computer, and/or any computer configuration based on Microsoft CE and/or Sybase operating system.

19. An arrangement as set forth in claim 16 for processing and comparing weighing results, **characterized in that** the data processing unit (240, 241) comprises an operating system, provided with high-speed hardware sensing and/or restrictions for booting as well as compatibility.

20. An arrangement as set forth in claim 16 for processing and comparing weighing results, **characterized by** comprising
- an A/D converter for digitizing the analog output signal of at least one sensor (210, 250),
- at least one serial buffer (230, 231) for transmitting said digital signal in a serial mode to the data processing unit (240).

21. An arrangement as set forth in claim 16 for processing and comparing weighing results, **characterized by** comprising means for compiling a document and/or a log memory entry from the weighing results and/or the check sum.

22. An arrangement as set forth in claim 21 for processing and comparing weighing results, **characterized by** comprising means for transmitting said document to a monitoring party (700) and/or a weighing service provider (600).

23. An arrangement as set forth in claim 16 for processing and comparing weighing results, **characterized by** said means for determining said figure of merit is arranged to determine said figure from weight measurement samples, measurement-disturbing quantities, measurement results for disturbing quantities, and/or from combinations of the above.

24. An arrangement as set forth in claim 21 and 23 for processing and comparing weighing results, **characterized by** comprising means for disclosing said figure of merit on said document.

## Patentansprüche

1. Verfahren zum Verarbeiten und Vergleichen von Wiegeergebnissen, **gekennzeichnet durch** die folgenden Schritte:
- Berechnen einer Prüfsumme auf der Basis von Kalibrierungseinstellungen für mindestens einen Sensor (210, 250) mittels einer Datenverarbeitungseinheit (240, 241), beispielsweise eines Codes (120) für eine Kalibrierungssoftware (300);
- Speichern einer Prüfsumme (130);
- Vergleichen von erzeugten und/oder zufällig auftretenden Variationen in der Prüfsumme mit vorherigen theoretischen und/oder voreingestellten Prüfsummen;
- Einschätzen eines Wiegeergebnisses bezüglich seiner Verläßlichkeit auf der Basis des Ergebnisses des Vergleiches; und
- Bestimmen eines Bewertungskriteriums zum weiteren Einschätzen der Verläßlichkeit des Wiegeergebnisses mittels der Datenverarbeitungseinheit.

2. Verfahren nach Anspruch 1, **dadurch gekennzeichnet, daß** die Prüfsumme auch auf der Basis eines Berechnungsprogramms für einen Kalibrierungsprogrammblock und/oder Meßergebnisse erstellt wird.

3. Verfahren nach Anspruch 1, **dadurch gekennzeichnet, daß** die Datenverarbeitungseinheit (240, 241) einen Programmcode hat, welcher sowohl die Berechnungssoftware (300) für Kalibrierungssoftware/Meßergebnisse als auch eine Datenverarbeitungssoftware (200) umfaßt.

4. Verfahren nach Anspruch 1, **dadurch gekennzeichnet, daß** die Berechnungssoftware (300) für Kalibrierungssoftware/Meßergebnisse und die Datenverarbeitungssoftware (200) übliche Unterprogramme (400,401) verwenden.

5. Verfahren nach Anspruch 1, **dadurch gekennzeichnet, daß** die Berechnungssoftware (300) für Kalibrierungssoftware/Meßergebnisse und die Datenverarbeitungssoftware (200) Benutzungsbeschränkungen aufweisen, welche voneinander verschieden sind.

6. Verfahren nach Anspruch 1, **dadurch gekennzeichnet, daß** eine Wiegeinformation, beispielsweise ein eine Prüfsumme tragendes Dokument, von der Datenverarbeitungseinheit (240, 241) an eine Überwachungseinheit (700) und/oder einen Wiegedienstleister (600) übergeben wird.

7. Verfahren nach Anspruch 1, **dadurch gekennzeichnet, daß** dem Benutzer Variationen in der Prüfsumme mitgeteilt werden.

8. Verfahren nach Anspruch 1, **dadurch gekennzeichnet, daß** die Datenverarbeitungseinheit (240, 241) verwendet wird, um auf der Basis der Verarbeitung und des Vergleiches ein Dokument und/oder einen Protokollspeichereintrag zu erstellen.

9. Verfahren nach Anspruch 1, **gekennzeichnet durch** die folgenden Schritte:
- Digitalisieren mindestens eines analogen Ausgabesignals mindestens eines Sensors (210, 250); und
- Übermitteln des digitalen Signals in einem seriellen Modus von seriellen Puffern (230, 231) an die Datenverarbeitungseinheit (240).

10. Verfahren nach Anspruch 9, **dadurch gekennzeichnet, daß** die Seriellmodus-Datenübermittlung (510) mittels GSM-, UMTS-, CDMA-, WCDMA-, Bluetooth-, Iridium-, Inmarsat-, TelDesic-, TCP/IP- und/oder IrDA-Drahtlos-Kommunikationsverbindungen oder mittels normaler unbeweglicher Verbindungen durchgeführt wird.

11. Verfahren nach Anspruch 1, **gekennzeichnet durch** ein Bestimmen des Bewertungskriteriums für das Wiegen aus Wiegemeßabtastungen, Meßverteilungsgrößen und/oder Meßergebnissen für verteilte Signale.

12. Verfahren nach Anspruch 11, **dadurch gekennzeichnet, daß** das Bewertungskriterium auf eine Analyse basiert, welche die Anzahl oder Unterteilung von Wiegemeßabtastungen, die Spitzen oder Varianzen der Abtastungen und/oder die Unterschiede zwischen von mehreren Wiegesensoren erhaltenen Meßabtastungen hieraus umfaßt.

13. Verfahren nach Anspruch 11, **dadurch gekennzeichnet, daß** die Bestimmung des Bewertungskriteriums mittels Verwendung der Messung von Beschleunigung, Temperatur, elektromagnetischer Strahlung, Luftdruck, Feuchtigkeit, Windgeschwindigkeit, Windrichtung und/oder einem Neigungswinkel durchgeführt wird.

14. Verfahren nach Anspruch 11, **dadurch gekennzeichnet, daß** das Bewertungskriterium mit einer Begrenzung oder einem Bereich in einer Weise eingestellt wird, daß der Benutzer informiert, das Wiegeergebnis verworfen und/oder ein erneutes Wiegen veranlaßt wird, wenn das Bewertungskriterium außerhalb des eingestellten Bereiches liegt.

15. Verfahren nach Anspruch 11, **dadurch gekennzeichnet, daß** das erstellte Bewertungskriterium auf eine Anzeige zusammen mit einem Wiegeergebnis gezeigt, in einem Protokollspeicher in logischer Verbindung mit einem Wiegeergebnis gespeichert und/oder auf einem Dokument zusammen mit einem Wiegeergebnis angezeigt wird.

16. Anordnung zum Verarbeiten und Vergleichen von Wiegeergebnissen, mit
- einer Datenverarbeitungseinheit (240, 241), welche einen Programmcode (300) zum Berechnen einer Prüfsumme auf der Basis von Kalibrierungseinstellungen mindestens eines Sensors (210, 250) umfaßt,
- Mittel zum Speichern einer Prüfsumme (130),
- Mittel zum Vergleichen von erzeugten und/oder zufällig auftretenden Variationen in der Prüfsumme mit vorherigen theoretischen und/oder voreingestellten Prüfsummen zum Einschätzen eines Wiegerergebnisses bezüglich seiner Verläßlichkeit und
- Mittel zum Bestimmen eines Bewertungskriteriums zum weiteren Einschätzen der Verläßlichkeit des Wiegeergebnisses mittels der Datenverarbeitungseinheit.

17. Anordnung nach Anspruch 16, **dadurch gekennzeichnet, daß** die Datenverarbeitungseinheit ein Programmcode zum Berechnen der Prüfsumme auch auf der Basis eines Berechnungsprogramms für ein Kalibrierungsprogrammblock und/oder Meßergebnisse umfaßt.

18. Anordnung nach Anspruch 16, **dadurch gekennzeichnet, daß** die Datenverarbeitungseinheit (240, 241) einen PC, ein mobiles Kommunikationsmittel und/oder eine Kombination aus einem mobilen Kommunikationsmittel und einem PC und/oder eine Apple Macintosh-Computer und/oder irgendeine auf ein Microsoft CE- und/oder Sybase-Betriebssystem basierende Computerkonfiguration umfaßt.

19. Anordnung nach Anspruch 16, **dadurch gekennzeichnet, daß** die Datenverarbeitungseinheit (240, 241) ein Betriebssystem umfaßt, welches mit Hochgeschwindigkeits-Hardwareabtastung und/oder Einschränkungen beim Hochfahren sowie bei der Kompatibilität versehen ist.

20. Anordnung nach Anspruch 16, **gekennzeichnet durch**
- einen A/D-Wandler zum Digitalisieren des analogen Ausgabesignals mindestens eines Sensors (210, 250) und
- mindestens einen seriellen Puffer (230, 231) zum Übermitteln des digitalen Signals in einem seriellen Modus an die Datenverarbeitungseinheit (240).

21. Anordnung nach Anspruch 16, **gekennzeichnet durch** Mittel zum Erstellen eines Dokumentes und/oder eines Protokollspeichereintrages aus den Wiegeergebnissen und/oder der Prüfsumme.

22. Anordnung nach Anspruch 21, **gekennzeichnet durch** Mittel zum Übermitteln des Dokumentes an eine Überwachungseinheit (700) und/oder einen Wiegedienstleister (600).

23. Anordnung nach Anspruch 16, **gekennzeichnet durch** ein Mittel zum Bestimmen des Bewertungskriteriums, das ausgestattet ist, das Kriterium aus Wiegemeßabtastungen, Meßverteilungsgrößen und/oder Meßergebnissen für Verteilungsgrößen zu bestimmen.

24. Anordnung nach Anspruch 21 und 23, **gekennzeichnet durch** Mittel zum Offenbaren des Bewertungskriteriums auf dem Dokument.

## Revendications

1. Procédé pour traiter et comparer des résultats de pesée, **caractérisé par** les étapes consistant à :
- calculer une somme de contrôle sur la base des réglages d'étalonnage pour au moins un capteur (210, 250) au moyen d'une unité de traitement de données (240, 241), par exemple un code (120) pour un logiciel d'étalonnage (300) ;
- stocker une somme de contrôle (130) ;
- comparer les variations effectuées et/ou intervenant de manière aléatoire dans ladite somme de contrôle à des sommes de contrôle théoriques précédentes et/ou préréglées ;
- juger la fiabilité d'un résultat de pesée sur la base du résultat de ladite comparaison ; et
- déterminer une valeur de mérite pour juger en outre ladite fiabilité dudit résultat de pesée au moyen de ladite unité de traitement de données.

2. Procédé selon la revendication 1, **caractérisé en ce que** ladite somme de contrôle est également compilée sur la base d'un programme de calcul pour un bloc de programme d'étalonnage et/ou des résultats de mesures.

3. Procédé selon la revendication 1 pour traiter et comparer des résultats de pesée, **caractérisé en ce que** l'unité de traitement de données (240, 241) a un code de programme qui comprend le logiciel de calcul (300) pour les résultats de logiciel d'étalonnage/de mesures et un logiciel de traitement de données (200).

4. Procédé selon la revendication 1 pour traiter et comparer des résultats de pesée, **caractérisé en ce que** le logiciel de calcul (300) pour les résultats de logiciel d'étalonnage/de mesures et le logiciel de traitement de données (200) emploient des sous-routines communes (400, 401).

5. Procédé selon la revendication 1 pour traiter et comparer des résultats de pesée, **caractérisé en ce que** le logiciel de calcul (300) pour les résultats de logiciel d'étalonnage/de mesures et le logiciel de traitement de données (200) ont des restrictions d'utilisation qui sont différentes de l'un à l'autre.

6. Procédé selon la revendication 1 pour traiter et comparer des résultats de pesée, **caractérisé en ce que** les informations de pesée, comme un document portant une somme de contrôle, sont livrées de l'unité de traitement de données (240, 241) à une partie de surveillance (700) et/ou à un prestataire de service de pesée (600).

7. Procédé selon la revendication 1 pour traiter et comparer des résultats de pesée, **caractérisé en ce que** les variations de la somme de contrôle sont signalées à un utilisateur.

8. Procédé selon la revendication 1 pour traiter et comparer des résultats de pesée, **caractérisé en ce que** l'unité de traitement de données (240, 241) est utilisée pour compiler un document et/ou une entrée de mémoire d'enregistrement sur la base dudit traitement et de ladite comparaison.

9. Procédé selon la revendication 1 pour traiter et comparer des résultats de pesée, **caractérisé par** les étapes consistant à :
- numériser au moins un signal de sortie analogique d'au moins un capteur (210, 250) ;
- transmettre ledit signal numérique dans un mode de série à l'unité de traitement de données (240) à partir des tampons de série (230, 231).

10. Procédé selon la revendication 9 pour traiter et comparer des résultats de pesée, **caractérisé en ce que** ladite transmission de données en mode de série 510 est effectuée au moyen de liaisons de communication sans fil GSM, UMTS, CDMA, WCDMA, Bluetooth, Iridium, Inmarsat, TelDesic, TCP/IP et/ou IrDA ou des connexions immobiles normales.

11. Procédé selon la revendication 1, **caractérisé par** la détermination de ladite valeur de mérite pour la pesée à partir d'échantillons de mesures de poids, de quantités de perturbations de mesures, de résultats de mesures pour des signaux de perturbations, et/ou de combinaisons de ce qui précède.

12. Procédé selon la revendication 11, **caractérisé en ce que** la valeur de mérite est basée sur l'analyse, impliquant le nombre ou la décomposition d'échantillons de mesures de poids, les pics ou la variance des échantillons, les différences entre les échantillons de mesures obtenus d'une pluralité de capteurs de pesée, ou une combinaison d'une partie de ce qui précède.

13. Procédé selon la revendication 11, **caractérisé en ce que** la détermination de la valeur de mérite est effectuée en utilisant la mesure de l'accélération, de la température, du rayonnement électromagnétique, de la pression d'air, de l'humidité, de la vitesse du vent, de la direction du vent et/ou d'un angle d'inclinaison.

14. Procédé selon la revendication 11, **caractérisé en ce que** la valeur de mérite est réglée avec une limite ou une plage de manière à ce que, lorsque la valeur de mérite se trouve à l'extérieur de la plage réglée, l'utilisateur est informé, le résultat de pesée est éliminé et/ou une nouvelle pesée est proposée.

15. Procédé selon la revendication 11, **caractérisé en ce que** la valeur de mérite compilée est représentée sur un écran d'affichage avec un résultat de pesée, stockée dans une mémoire d'enregistrement en association logique avec un résultat de pesée, et/ou affichée sur un document avec un résultat de pesée.

16. Dispositif pour traiter et comparer des résultats de pesée, **caractérisé en ce qu'**il comprend :
- une unité de traitement de données (240, 241), comprenant un code de programme (300) pour calculer une somme de contrôle sur la base des réglages d'étalonnage d'au moins un capteur (210, 250) ;
- un moyen pour stocker une somme de contrôle (130) ;
- un moyen pour comparer les variations effectuées et/ou intervenant de manière aléatoire dans la somme de contrôle à des sommes de contrôle théoriques précédentes et/ou préréglées pour juger la fiabilité d'un résultat de pesée ; et
- un moyen pour déterminer une valeur de mérite pour juger en outre ladite fiabilité dudit résultat de pesée par ladite unité de traitement de données.

17. Dispositif selon la revendication 16, **caractérisé en ce que** l'unité de traitement de données comprend un code de programme pour calculer ladite somme de contrôle également sur la base d'un programme de calcul pour un bloc de programme d'étalonnage et/ou des résultats de mesures.

18. Dispositif selon la revendication 16 pour traiter et comparer des résultats de pesée, **caractérisé en ce que** l'unité de traitement de données (240, 241) comprend un PC, un communicateur mobile, et/ou une combinaison d'un communicateur mobile et d'un PC et/ou d'un ordinateur Apple Macintosh, et/ou n'importe quelle configuration informatique basée sur un système d'exploitation Microsoft CE et/ou Sybase.

19. Dispositif selon la revendication 16 pour traiter et comparer des résultats de pesée, **caractérisé en ce que** l'unité de traitement de données (240, 241) comprend un système d'exploitation, fourni avec une détection de matériel à grande vitesse et/ou des restrictions d'amorçage ainsi que de compatibilité.

20. Dispositif selon la revendication 16 pour traiter et comparer des résultats de pesée, **caractérisé en ce qu'**il comprend :
- un convertisseur analogique numérique pour numériser le signal de sortie analogique d'au moins un capteur (210, 250),
- au moins un tampon de série (230, 231) pour transmettre ledit signal numérique dans un mode de série à l'unité de traitement de données (240).

21. Dispositif selon la revendication 16 pour traiter et comparer des résultats de pesée, **caractérisé en ce qu'**il comprend un moyen pour compiler un document et/ou une entrée de mémoire d'enregistrement à partir des résultats de pesée et/ou de la somme de contrôle.

22. Dispositif selon la revendication 21 pour traiter et comparer des résultats de pesée, **caractérisé en ce qu'**il comprend un moyen pour transmettre ledit document à une partie de surveillance (700) et/ou à un prestataire de service de pesée (600).

23. Dispositif selon la revendication 16 pour traiter et comparer des résultats de pesée, **caractérisé en ce que** ledit moyen pour déterminer ladite valeur de mérite est agencé pour déterminer ladite valeur à partir d'échantillons de mesures de poids, de quantités de perturbations de mesures, de résultats de mesures pour des quantités de perturbations, et/ou des combinaisons de ce qui précède.

24. Dispositif selon les revendications 21 et 22 pour traiter et comparer des résultats de pesée, **caractérisé en ce qu'**il comprend un moyen pour divulguer ladite valeur de mérite dans ledit document.
